Europäisches Patentamt

European Patent Office

Office européen des brevets

(19)

(11) Publication number : **0 627 601 A1**

(12) **EUROPEAN PATENT APPLICATION**

(21) Application number : **94303368.8**

(22) Date of filing : **11.05.94**

(51) Int. Cl.⁵ : **F24F 11/047, F24F 13/15, G05D 7/01**

(30) Priority : **09.03.94 GB 9404556**
**07.10.93 GB 9320706**
**15.05.93 GB 9310150**

(43) Date of publication of application :
**07.12.94 Bulletin 94/49**

(84) Designated Contracting States :
**BE DE DK ES FR IT NL SE**

(71) Applicant : **Thurgood, Paul**
**5 Egmont House,**
**1 Egmont Road**
**Sutton, Surrey SM2 5JP (GB)**

(72) Inventor : **Thurgood, Paul**
**5 Egmont House,**
**1 Egmont Road**
**Sutton, Surrey SM2 5JP (GB)**

(54) **Air flow regulating device.**

(57)    An airflow regulating device for regulating the airflow through an opening comprises one or more vanes (7) extending across an aperture (5) and movable between a first position in which the airflow through the aperture (5) is reduced to a minimum and a second position in which the airflow through the aperture (5) is a maximum. A surface of said vane(s) (7) is acted on by the airflow to move the vane(s) (7) towards the first position. Control means (21) are provided comprising non-linear compression spring means (23) acting on the vane(s) (7) so as to bias the vane(s) towards the second position and adjustment means (33) are provided for varying the action of the spring means (23). The non linearity of the spring means (23) is such that spring strength increases when the compression force acting thereon increases and vice versa.

FIGURE 1

EP 0 627 601 A1

This invention relates to an air flow regulating device.

Any air system which requires a controlled air volume flow rate at a particular location of the system and where the air flow arriving at that location has a variable pressure, some form of regulating device is required to compensate for variations in air pressure, either manually or automatically.

In an air ducting system in a building, for example, a series of manually adjustable dampers could be used to give a required air flow from various air outlets.

In a more simple case, a window in a building can be manually adjusted so as to vary the airflow therethrough so as to compensate for exterior conditions such as wind force, wind direction, air temperature etc. Because wind conditions change continuously it is difficult, if not impossible to achieve any consistent flow manually.

The present invention seeks to provide an airflow regulating device in which the device is sensitive to the condition of the arriving air and controls the airflow in response thereto in a relatively simple manner.

According to the invention, an airflow regulating device for regulating the airflow through an opening comprising one or more vanes extending across an aperture and movable between a first position in which the airflow through the aperture is reduced to a minimum and a second position in which the airflow through the aperture is a maximum, a surface of said vane(s) being acted on by the airflow to move the vane(s) towards the first position and control means comprising non-linear compression spring means acting on the vane(s) so as to bias the vane(s) towards the second position and adjustment means for varying the action of the spring means, the non linearality of the spring means being such that spring strength increases when the compression force acting thereon increases and vice versa.

The spring means may comprise a spirally wound spring of pyramidal exponential or parabolic shape. The spring means may comprise a plurality of springs of different strengths connected in series. Alternatively the spring means comprises a spring formed from wire of varying cross sectional area.

The spring strength of the spring means may be adjustable so as to vary the action of the vane(s) against the airflow.

Temperature sensing means may be provided for controlling the spring strength in dependence thereon so as to increase the flow of air with increases in temperature and vice versa or to decrease the flow of air with increases of temperature and vice versa.

The invention will now be described in greater detail, by way of example, with reference to the drawings, in which:-

Figure 1 is a sectional view of one form of air flow regulating device in accordance with the invention and taken on the line I-I of figure 2;

Figure 2 is a front view of the air flow regulating device of figure 1;

Figure 3 is a graphical representation of the desired characteristic of the spring used to control the device of figures 1 and 2;

Figure 4 is a diagrammatic representation of one form of spring suitable for use in the device of figures 1 and 2;

Figure 5 is a diagrammatic representation of an alternative to the spring of figure 4 in which a series connected bank of springs similar to that indicated in figure 4;

Figure 6 is a view similar to figure 5 but showing a bank of springs similar to those of figure 5 but differently connected;

Figure 7 is a view of a single spring suitable as an alternative to the single spring shown in figure 4;

Figure 8 is a sectional view similar to figure 1 but showing a second form of connection of the blades;

Figure 9 is a front view of the device shown in figure 8;

Figure 10 is a plan view of a vane for use in the device shown in figures 8 and 9;

Figure 11 is a sectional view similar to figure 1 but showing a third form of connection of the blades;

Figure 12 is a front view of the device shown in figure 11;

Figure 13 is a view similar to figure 8 but in which additional control is provided;

Figure 14 is a view similar to figure 13 but showing an additional control with a reverse action;

Figure 15 shows a number of possible vane sections;

Figures 16 and 17 show fragments of the operating arrangement in which compensation is provided for the arcuate movement of the connecting rod;

Figures 18 to 20 show single vane versions of the invention, and

Figures 21 to 23 show three versions of variable configuration vanes.

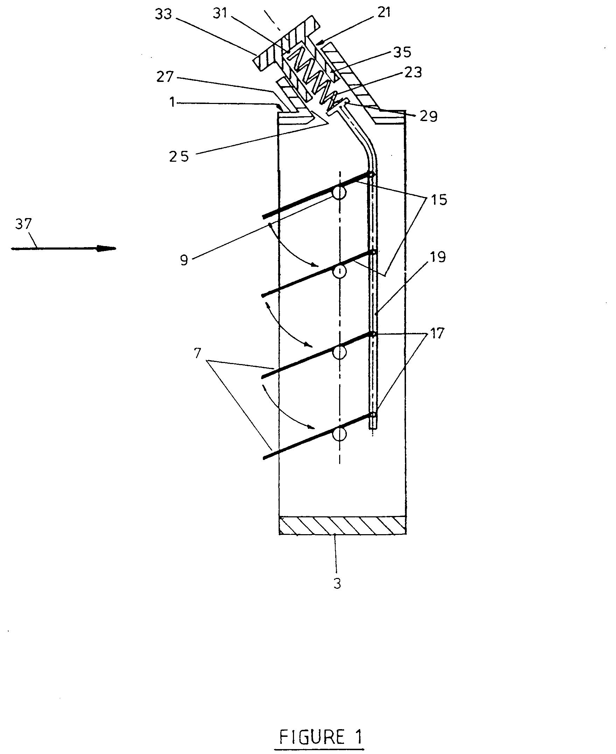

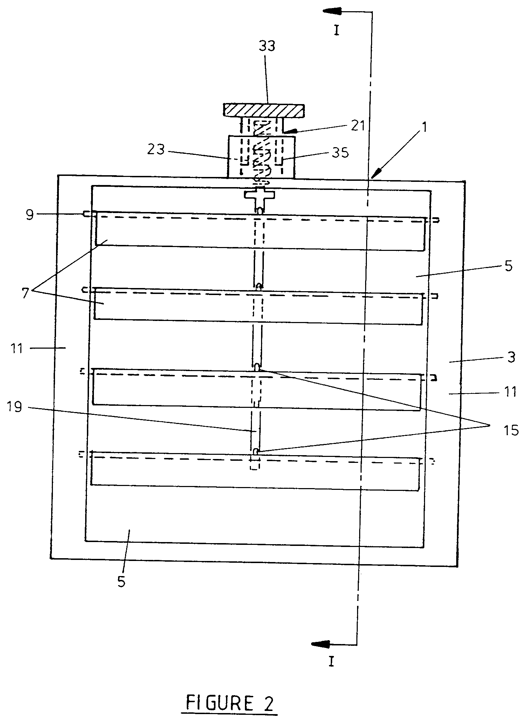

Referring firstly to figures 1 and 2, an air flow regulating device is shown at **1** for regulating the air flow through an aperture such as an air intake into a building. The device **1** has an external casing **3** for location in the aperture and defining an air flow aperture **5**. Stretching across this aperture in a horizontal direction are a plurality of vanes **7** pivoted on rods **9**, the ends of which are located in bearings in the side walls **11** of the casing **3**.

Each of the vanes **7** has a rigid rearwardly extending arm **15** centrally located and pivoted at the rear at **17** to a vertical connecting rod **19** so arranged that all the vanes **7** pivot together about the rods **9**. The movement of this connecting rod **19** is controlled by forces acting on the vanes **7** (moving the connecting rod upwards) and a control mechanism, generally indicated at **21**, (tending to move the connecting rod **19** downwards).

It will be observed that the control mechanism **21** is located at an angle α to the rod **19** so that it acts generally on a line connecting the ends of the arms **15** at the ends of their travel. The control mechanism comprises basically a spring **23** situated is a bore **25** in the upper side **27** of the casing **3** and acting, in compression, between a head **29** on the connecting rod **19** and an abutment **31** formed by a screw threaded cap **33**, screwable into the bore **25**. The threaded portion **35** of the cap **33** extends downwardly around the spring **23**, the end position of the upper end of the spring **23** being adjusted by screwing the cap **33** in and out of the bore **25**.

As will be appreciated, the air flow whose direction is indicated by the arrow **37** will act on the vanes **7** to rotate them in an anticlockwise direction, decreasing the aperture opening and pushing the connecting rod **19** upwards. This movement of the connecting rod **19** will act to compress the spring **23**, causing a counter force to act on the connecting rod **19**. Thus an equilibrium position is achieved and as a result, a particular upstream pressure will generate a related opening size of aperture.

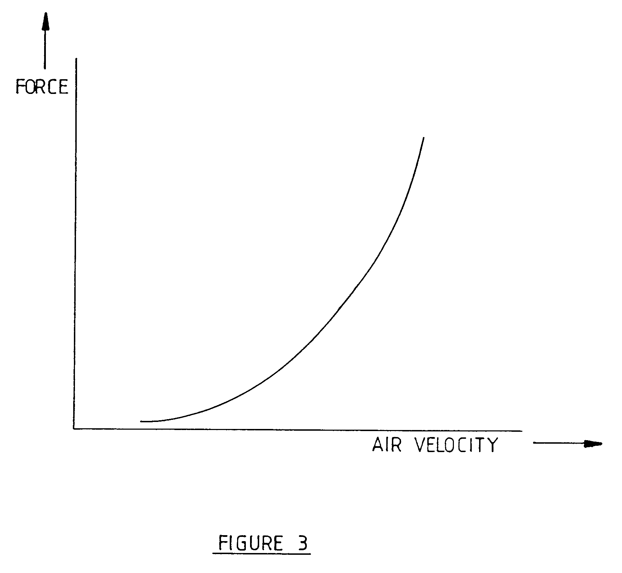

While the device as described so far will operate to an extent in the sense that the flow aperture is dependent on the airflow and thus will provide an approximation of a constant airflow over small ranges of air velocities, to provide an approximation of constant airflow over larger ranges of velocity, or indeed, to provide a more accurate approximation, a variable reaction is required. This will depend not only on the ratio of the force applied to the vanes **7** to the volume flow of air but also on the angle at which the air hits the vanes **7** and the drag produced by the vanes and the aperture. and friction in the moving parts. It is estimated that the force which will be applied to the vanes **7** will be approximately proportional to the square of airflow velocity across the vanes **7** or

$$f = a \frac{kv^2}{2} \rho$$

where **f** is the force acting on the vanes **7**, a is the area of the vanes, **k** is a constant, v is the air velocity and ρ is the air density. Figure 3 is a graphical representation of the relationship between the air flow velocity and the force applied to the vanes **7**.

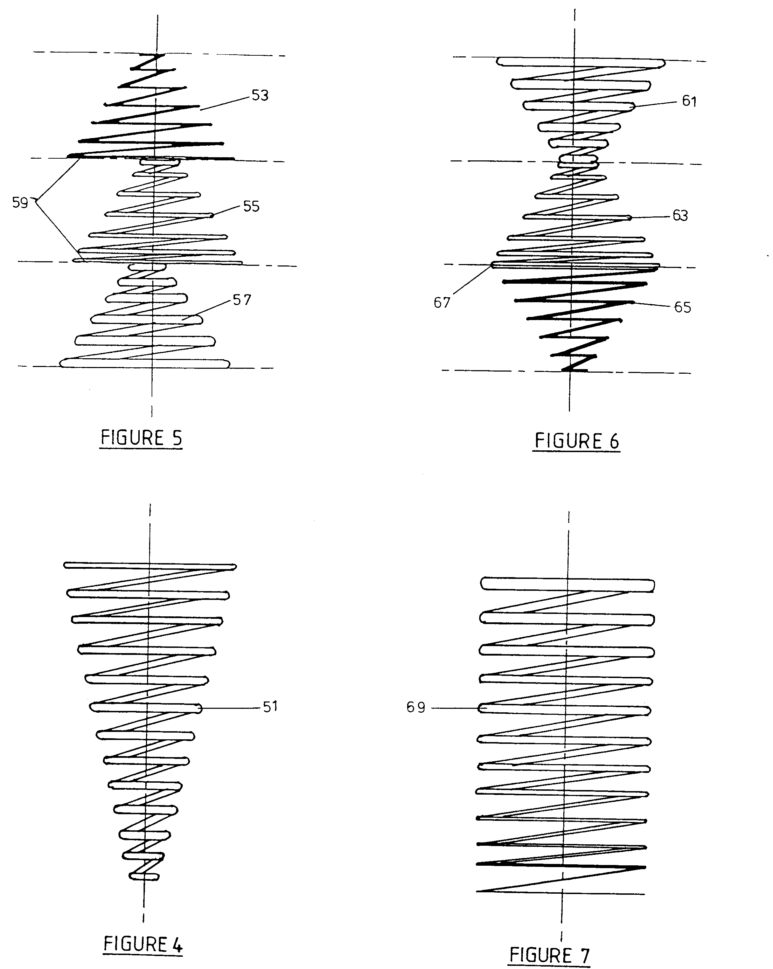

In order to compensate for this ratio, the compensating force of the spring **23** must be variable. This variation can be achieved in a number of different ways. Figures 4 to 7 show different spring arrangements which would be suitable for this purpose.

Figure 4 shows a first form of spring **51** consisting of a constant dimensioned wire spring wound in a rising spiral so as to form a pyramidal shape. As the spring **51** is compressed, the spring resistance will increase to a maximum where the turns of the spring **51** are touching. Alternative shapes which could be used include exponential or parabolic.

In order to provide for a greater variation than can be achieved by a single spring, figure 5 shows a banked arrangement of three pyramidal springs **53**, **55** and **57**. Each of the springs **53**, **55** and **57** is formed from a different cross sectional area of wire, the spring **53** having the smallest area wire while the spring **57** has the largest area wire. The two upper springs **53** and **55** have their bases located on plates **59** which in turn sit on the tips of the springs **55** and **57** respectively.

Under compression, the compressing force is transmitted throughout the springs by way of the plates **59**. During a compression, the upper spring **53** will be compressed the most, being the weakest of the three springs, until the spring coils are flattened into a flat spiral against its base plate **59**. At this point, the resistance will substantially increase as the second spring **55** comes fully into play. Further compression will flatten this second spring **55** until it too lies flat against its base plate **59**. Thereupon, the third and strongest string will come fully into lay and again the spring resistance will substantially increase.

In this way a large variation of spring strengths can be achieved. It will of course be understood that the spring strengths and the number of springs used will be determined by the characteristics of a particular application. Thus a single spring (figure 4) could be used or a larger number, say four or five could be used where circumstances require it.

Figure 6 shows an alternative three spring arrangement with three springs **61**, **63** and **65** arranged so that the springs are connected with like ends together. This avoids the need of more than one plate **67** between the springs.

Figure 7 shows a different approach to the single spring form. Here the spring **69** has the usual helical form, the variation in its strength being brought about by reducing the cross sectional area of the wire of which the spring **69** is wound. Thus the wire is thinnest at the bottom and gradually thickens until it is at its thickest at the top.

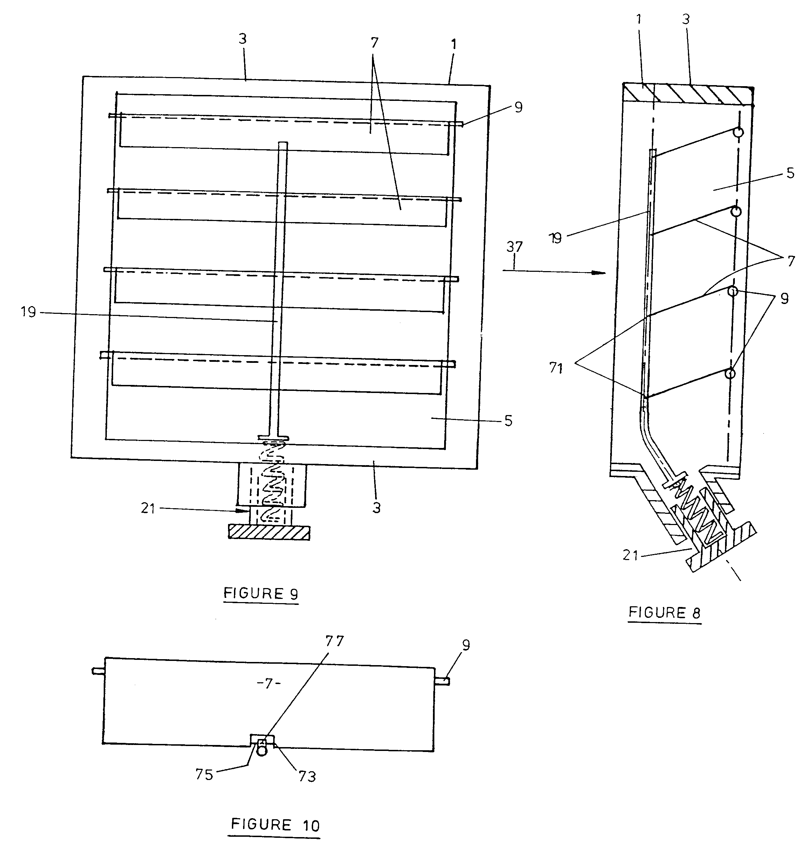

Figures 8 to 10 show a second form of a device in accordance with the invention. Here, instead of the vanes **7** being connected to the rod **19** by means of extensions **15**, the rod **19** is located at the front of the vanes **7** and is pivotally connected thereto at **71**. To this end, each vane **7** is provided with a cut away portion **73** (see particularly figure 10), a pivot pin **75** being located across this cut away and being received in a socket arrangement **77** located on the rod **19**.

It will be appreciated that, because the rod **19** is located at the front of the vanes **7**, the control mechanism **21** must be located beneath the device instead of above it as in the first embodiment.

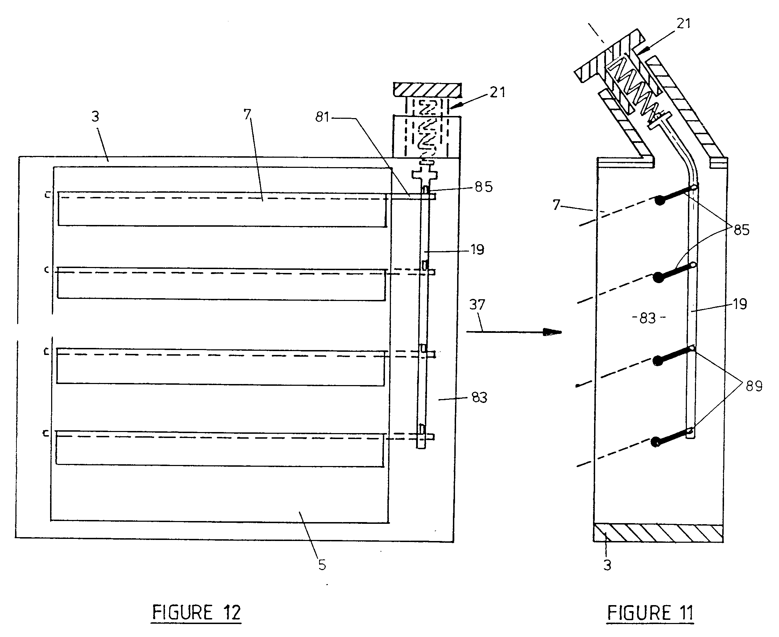

Figures 11 and 12 show a third embodiment of the invention in which the rod **19** is located outside the aperture **5** so as to remove any obstruction to the passage of air between the vanes **7** and thus reduce the drag on the airflow. To this end, the pivot rods **9** at one end of the blades **7** is extended outwardly at **81** so as to pass into a chamber **83** adjacent to the aperture **5** and containing the rod **19**. Here these pivot rod extensions **81** are fixedly connected to lever arms **85** which rotate with the pivot rods 9 and thus with the vanes **7**. These arms **85** are pivoted to the control rod **19** at **89**.

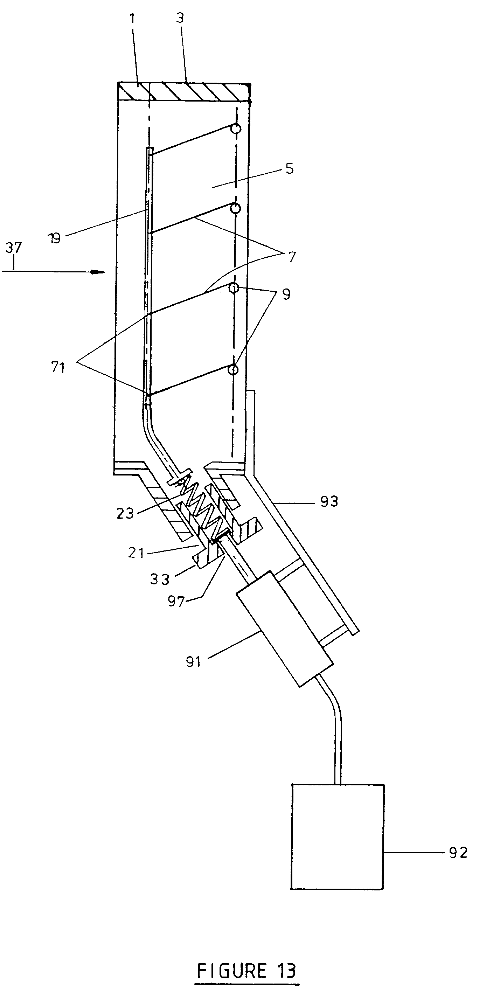

Figure 13 shows a modification to the embodiment shown in figures 8 to 10.

.This shows a thermal or electric actuator **91** mounted on the casing **3** by means of a mounting bracket **93**. The slider **97** Of the actuator **91** passes through the end cap **33** to engage the spring **23**. Suitably, particularly where the actuator **91** is electric, it may be controlled by a remote sensor **92**. Suitable electric actuators include solenoids or motor actuators..

Suitable thermal actuators include a thermally expanding wax device such as are often used in thermostatic regulator valves. This device would compress the spring **23** as the temperature increases, thereby increasing the air flow rate. As will be understood, this arrangement would usually be used with a cooling system and thus it would be the air flow rate of cooling air which would be controlled.

With an electric actuator **91**, this could be used for various control functions and could be arranged to override the spring **23** and open or close the vanes **7** to a desired extent or it could be used for varying the spring's initial compression.

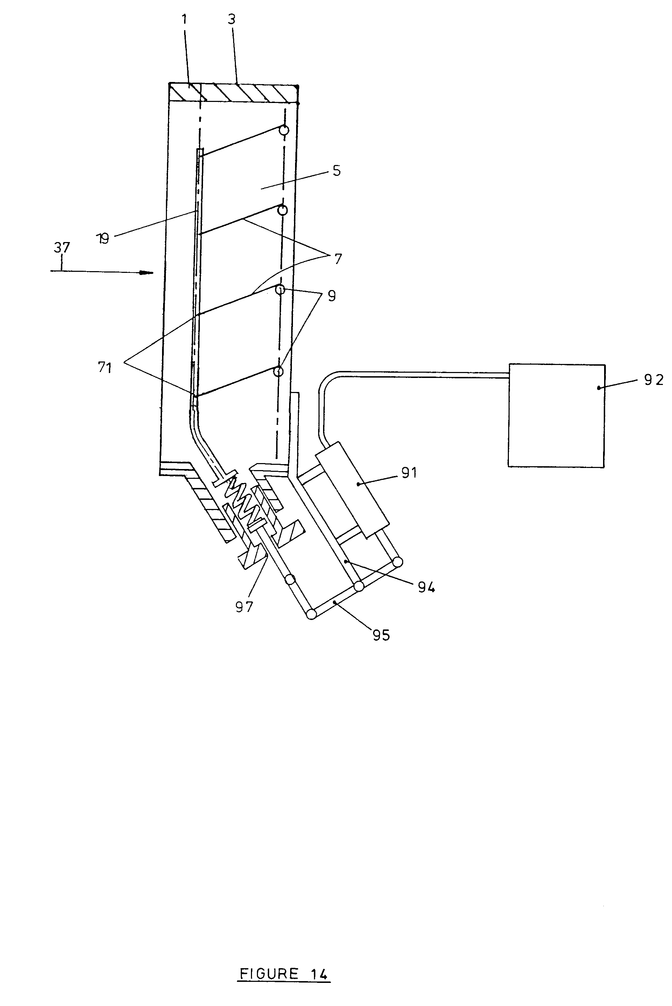

Figure 14 shows an arrangement similar to figure 13 but arranged to decrease the air flow, for example, with increasing temperature. Thus, this arrangement could control the supply of hot air rather than cold air. To this end, the actuator **91** is mounted on the outside of a mounting bracket **94** and a reversing linkage **95** is provided to reverse the thrust provided by the actuator **91**.

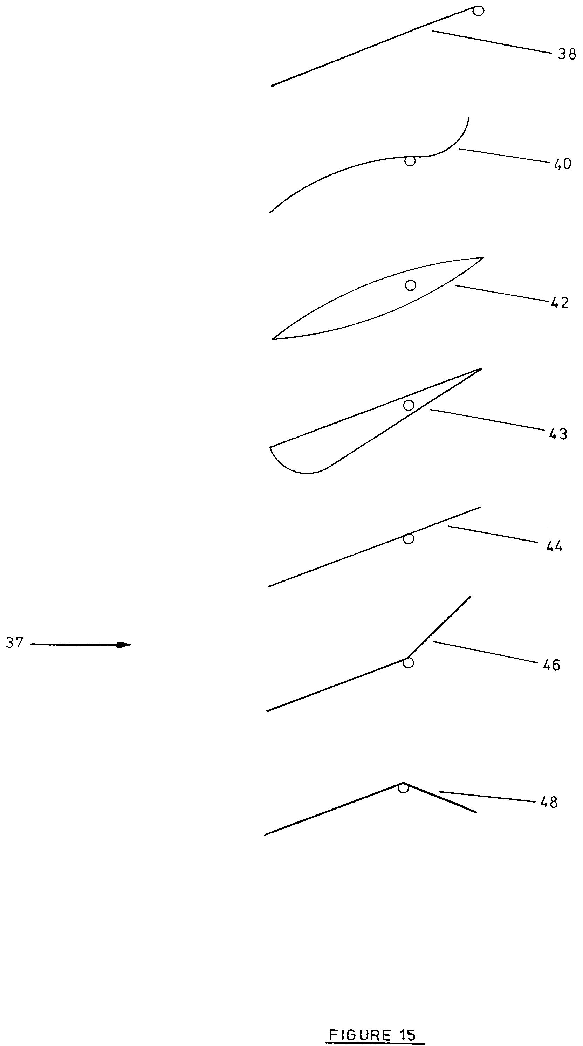

Figure 15 shows seven different configurations of vane which can be used to provide a specific characteristic of the conversion of the airflow into a force acting on the vane. Vane **38** is straight vane pivoted at one end. **40** shows a smoothly curved vane having an upwardly extending portion behind the pivot while **42** and **43** show two different aerodynamic shapes. **44** is a straight vane pivoted away from its ends and **46** and **48** show vanes having upwardly and downwardly extending rear portions respectively.

One situation which may be experienced with the above described embodiments lies in the fact that, because the connecting rod **19** is attached to the vanes **7** such that the connection points **17** move in the arc of a circle, this will put a stress on the connecting rod **19** which ideally should move linearly in its action on the spring **23**. This may cause the action of the spring **23** to be well short of ideal and, in some instances, may well cause wear of bearings in which the rod **19** slides.

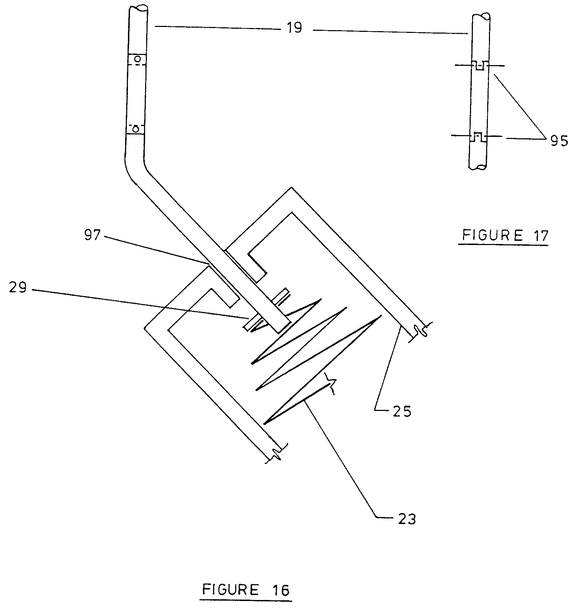

Figures 16 and 17 show one example of obviating this problem. In this embodiment the rod **19** is provided with two hinge points **95** of the pin type whereby the arcuate movement of the rod **19** can be taken up to a large extent so as to provide a substantially linear action on the spring **23**.

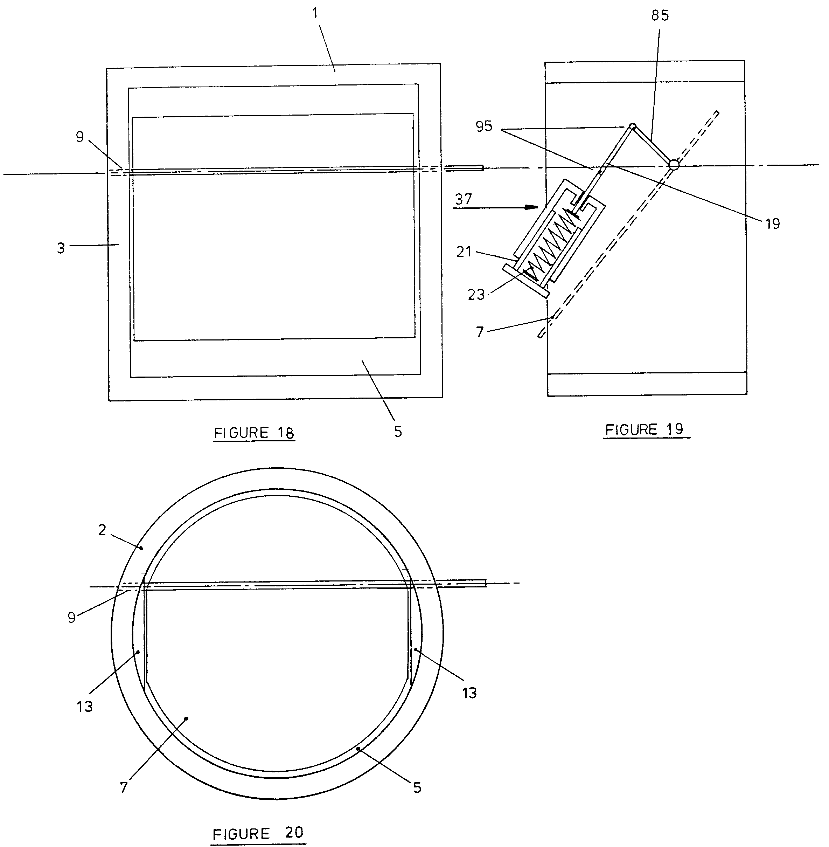

Figures 18, 19 and 20 show embodiments in which only a single vane **7** is used. Figures 18 and 19 show the use of a substantially square vane **7** in a substantially square aperture 5 while figure 20 uses a circular vane **7** in a circular aperture **5**. It is to be noted here that the sides of the aperture **5** are squared off at **13** to avoid the vane **7** catching the circular casing **2** as the pivot axis **9** of the vane **7** is not diametral.

Figure 19 also shows a variation of the actuating arrangement showing the use of the two pin type hinges **95** of figure 17. The connecting rod **19** has an upper part in the form of a connecting lever **85** which is located substantially at right angles to the rest of the rod **19**.

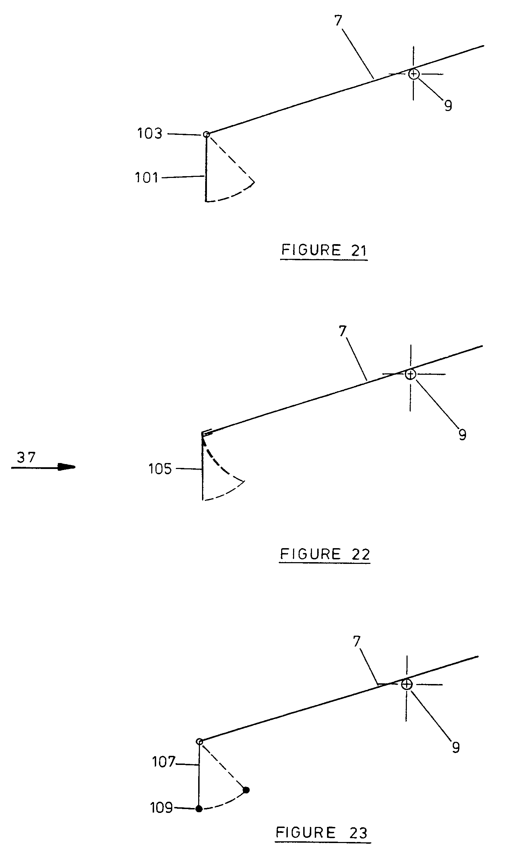

Figures 21 to 23 show diagrammatically arrangements in which the vane shape, and therefore its effect, can be changed in dependence on the airflow.

Thus figure 21 shows an arrangement in which the vane **7** is provided with an extension part **101** pivoted at **103** between the positions shown in full and broken lines, the extension part **101** being biased towards its full line position by means of a light spring (not shown).

Figure 22 is an arrangement similar to figure 21 but in this case, the extension part **101** is replaced with an extension part **105** which is produced from a flexible material such as rubber or suitable plastics material.

Figure 23 again shows an arrangement similar to figure 21 but here an extension part **107** carries light weights **109** to give it bias.

These three extension parts cause the discharge coefficient to change for any given position of the vane **7** with the change in pressure drop across the vane **7**. This causes the spring deflection against pressure drop curves to be more consistent in their shape for a range of different airflow volumes, thus increasing the accuracy of the device over this range.

It is also to be understood that while the extension parts have been shown in connection with a flat vane **7**, they may equally well be used with any other type of vane, particularly those forms of vane shown in figure 15.

It will be appreciated that modifications or additions to the above described embodiments may be carried out without departing from the scope of the invention. For example, although arrangement with one or four vanes has been shown, any suitable number of vanes could be used from one upwards. The variable strength springs which have been described could be replaced by a bank of a number of standard helical springs of different diameters and strengths. While this would produce a somewhat stepwise operation, this might well be sufficient for a number of purposes, particularly where a suitable number of individual springs were used.

From the above, it will be appreciated that the invention provides an airflow regulating device in which the airflow can be controlled in dependence on the air pressure or air flow velocity. With suitable selection of the parameters of the control device, such control can approximate to a greater or lesser extent a constant airflow volume condition irrespective of the upstream pressure.

**Claims**

1. An airflow regulating device for regulating the airflow through an opening comprising one or more vanes extending across an aperture and movable between a first position in which the airflow through the aperture is reduced to a minimum and a second position in which the airflow through the aperture is a maximum, a surface of said vane(s) being acted on by the airflow to move the vane(s) towards the first position and control means comprising non-linear compression spring means acting on the vane(s) so as to bias the vane(s) towards the second position and adjustment means for varying the action of the spring means, the non linearality of the spring means being such that spring strength increases when the compression force acting thereon increases and vice versa.

2. A device as claimed in claim 1, wherein the spring means comprises a spirally wound spring of pyramidal exponential or parabolic shape.

3. A device as claimed in claim 1 or 2, wherein the spring means comprises a plurality of springs of different strengths connected in series.

4. A device as claimed in claim 1,2 or 3, wherein the spring means comprises a spring formed from wire of varying cross sectional area.

5. A device as claimed in any preceding claim. wherein the spring strength of the spring means is adjustable so as to vary the pivotal action of the vane(s) against the airflow.

6. A device as claimed in claim 5, wherein temperature sensing means are provided for controlling the spring strength in dependence thereon so as to increase the flow of air with increases in temperature and vice versa or to decrease the flow of air with increases of temperature and vice versa.

7. A device as claimed in claim 5 or 6, wherein a servo device is provided for adjusting the spring strength of the spring means whereby remote control of the spring strength can be achieved.

8. A device as claimed in claim 7, wherein the servo device comprises a solenoid actuator.

9. A device as claimed in any preceding claim, wherein in the first position, the vane(s) extend(s) in substantially the same plane so as to close the aperture.

10. A device as claimed in any preceding claim, wherein, in the second position, the vane(s) is(are) aligned in a direction approaching the direction of the air flow.

FIGURE 1

FIGURE 2

FIGURE 3

FIGURE 5

FIGURE 6

FIGURE 4

FIGURE 7

FIGURE 9

FIGURE 8

FIGURE 10

FIGURE 12

FIGURE 11

FIGURE 13

FIGURE 14

38

40

42

43

44

37 →

46

48

FIGURE 15

14

19

95

FIGURE 17

97

29

25

23

FIGURE 16

FIGURE 18

FIGURE 19

FIGURE 20

FIGURE 21

FIGURE 22

FIGURE 23

**European Patent Office**

# EUROPEAN SEARCH REPORT

Application Number

EP 94 30 3368

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-3 255 963 (GORCHEV)<br>* column 4, line 10 - line 75; figures 5,6 * | 1-10 | F24F11/047<br>F24F13/15<br>G05D7/01 |
| | --- | | |
| A | US-A-3 565 105 (TOSHIYUKI MURAKAMI)<br>* column 1, line 1 - column 2, line 34; figures * | 1,2 | |
| | --- | | |
| A | US-A-3 955 595 (MODES)<br>* abstract *<br>* column 5, line 13 - line 26; figures * | 1,3,5-7 | |
| | --- | | |
| A | CH-A-88 609 (BROWN, BOVERI & CIE.)<br>* page 1, left column, line 1 - page 2, left column, line 2; figures 1,3,4 * | 2,4 | |
| | ----- | | |

TECHNICAL FIELDS SEARCHED (Int.Cl.5)

F24F
F16F

The present search report has been drawn up for all claims

| Place of search | Date of completion of the search | Examiner |
|---|---|---|
| THE HAGUE | 29 August 1994 | Van der Wal, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document